# EUROPEAN PATENT APPLICATION

(11) **EP 4 564 913 A1**
(43) Date of publication of application: **04.06.2025**
(21) Application number: 23849113.8
(22) Date of filing: 29.06.2023
(51) Int. Cl.: H04W 36/00

(54) **COMMUNICATION METHOD AND COMMUNICATION APPARATUS**

(30) Priority: 05.08.2022 CN 202210939716
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN)
(74) Representative: Maiwald GmbH
(86) International application number: PCT/CN2023/103974
(87) International publication number: WO 2024/027403

(57) **Abstract**

Embodiments of this application provide a communication method and a communication apparatus. The method includes: A terminal device receives first information, where the first information is related to a status of a first multicast service, and/or the first information is related to configuration information of the first multicast service in a second cell. The terminal device determines, based on the first information, whether to send first request information to the second cell, where the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from the first cell to the second cell. According to technical solutions provided in this application, a waste of resources caused because the terminal device unnecessarily enters a connected state in a handover or reselection process is avoided.

## Description

This application claims priority to Chinese Patent Application No. 202210939716.2, filed with the China National Intellectual Property Administration on August 5, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

A multicast and broadcast service (multicast and broadcast service, MBS) is a service oriented to a plurality of terminal devices (user equipments, UEs), like a live broadcast service, a public security service, or a batch software update service. The MBS service is from a data server. The data server sends MBS data to a core network device, then the core network device sends the MBS data to a base station, and finally the base station sends the MBS data to at least one terminal device that receives the MBS service.

When a core network sends the MBS data to the base station, transmission of the MBS service is performed by using a common transmission channel MBS session, and each MBS session may include at least one MBS QoS flow. However, when the base station sends the MBS data to the terminal device, transmission of a data packet is performed by using an MBS radio bearer. There are two transmission modes for one MBS radio bearer. In a first mode, a point-to-multipoint (point-to-multipoint, PTM) transmission manner may be used. In a second mode, a point-to-point (point-to-point, PTP) transmission manner may be used.

A multicast service is designed for a service with a high QoS requirement. Group management needs to be performed for the multicast service. A same QoS level may be provided for the multicast service and a unicast service. Specifically, for the multicast service, the core network needs to manage joining and exiting of the terminal device. Transmission between the core network and the base station depends on a PDU session, and a new MBS QoS flow is introduced. For a radio access network (radio access network, RAN), sending data to the terminal device in PTP and PTM transmission manners is supported, and dynamic switching that is between PTP and PTM and that is controlled by the RAN is supported. In 3GPP Release 17, the multicast service can be provided only for a terminal device in a radio resource control (radio resource control, RRC) connected state, and an access network and the core network need to maintain information about a terminal device corresponding to a multicast service group.

### SUMMARY

Embodiments of this application provide a communication method. This can avoid a case in which when a terminal device performs handover or reselection from a first cell, the terminal device initiates unnecessary request information for establishing a connection or resuming a connection, to reduce resource consumption.

According to a first aspect, a communication method is provided, including: A terminal device receives first information, where the first information is related to a status of a first multicast service, and/or the first information is related to configuration information of the first multicast service in a second cell. The terminal device determines, based on the first information, whether to send first request information to the second cell, where the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from the first cell to the second cell. According to the communication method provided in this application, the terminal device receives the first information, and determines, based on the first information, whether to send the first request information to the second cell, where the first request information is used by the terminal device to perform handover or reselection from the first cell to the second cell to establish or resume the RRC connection. The first information is related to the status of the first multicast service, and/or the first information is related to the configuration information of the first multicast service in the second cell. This can avoid a case in which when the terminal device performs handover or reselection from the first cell, the terminal device initiates unnecessary request information for establishing a connection or resuming a connection, to reduce resource consumption.

It should be understood that, when the terminal device performs handover or reselection from the first cell to the second cell, direct access of the terminal device may occupy an access resource of a network. Therefore, the method provided in this application can further avoid increasing a degree of network congestion.

With reference to the first aspect, in some possible implementations, that the terminal device determines, based on the first information, whether to send first request information to the second cell includes: When the status of the first multicast service is an activated state, the terminal device sends the first request information to the second cell, or when the status of the first multicast service is a deactivated state, the terminal device remains in the non-connected state.

Based on the foregoing solution, when the first information is related to the status of the first multicast service, the terminal device determines, based on the status of the first multicast service, whether to send the first request information to the second cell, or the terminal device continues to remain in the non-connected state, to avoid a waste of resources caused because the terminal device initiates access without determining the service status, and is released because the service is deactivated after the terminal device enters a connected state in the second cell.

With reference to the first aspect, in some possible implementations, that the terminal device determines, based on the first information, whether to send first request information to the second cell includes: When configuration information of a first multicast service in the first cell is different from that in the second cell, the terminal device sends the first request information to the second cell, or when configuration information of a first multicast service in the first cell is the same as that in the second cell, the terminal device remains in the non-connected state.

Based on the foregoing solution, when the first information is related to the configuration information of the first multicast service in the second cell, the terminal device determines, based on the configuration information of the first multicast service in the second cell, whether to send the first request information to the second cell, or the terminal device continues to remain in the non-connected state, to avoid a waste of resources caused because the terminal device initiates access without determining whether configurations are the same, and is released after the terminal device enters the connected state in the second cell, and unnecessary access is caused due to the same configurations.

With reference to the first aspect, in some possible implementations, that the terminal device determines, based on the first information, whether to send first request information to the second cell includes: When configuration information of a first multicast service in the first cell is the same as that in the second cell, and the status of the first multicast service is an activated state, the terminal device sends the first request information to the second cell, or when configuration information of a first multicast service in the first cell is the same as that in the second cell, and the status of the first multicast service is a deactivated state, the terminal device remains in the non-connected state.

Based on the foregoing solution, when the first information is related to the status of the first multicast service and the configuration information of the first multicast service in the second cell, the terminal device determines, based on the status of the first multicast service and the configuration information of the first multicast service in the second cell, whether to send the first request information to the second cell, or the terminal device continues to remain in the non-connected state, to avoid a waste of resources caused because the terminal device is released after entering the connected state in the second cell.

With reference to the first aspect, in some possible implementations, the terminal device receives a first paging message, where the first paging message includes an identifier of the first multicast service.

Based on the foregoing solution, when the terminal device remains in the non-connected state, and the terminal device receives the first paging message, where the first paging message includes the identifier of the first multicast service, the terminal device determines that the first multicast service is activated or the terminal device needs to enter the connected state. For example, the terminal device sends the first request information to the second cell based on the first paging message, and enters the connected state.

With reference to the first aspect, in some possible implementations, the terminal device receives second information, where the second information is used to determine that the second cell does not provide the first multicast service for the terminal device in the non-connected state.

Based on the foregoing solution, the terminal device receives the second information, where the second information may be from the first cell or the second cell, and the second information is used to determine that the second cell does not provide the first multicast service for the terminal device in the non-connected state. In this case, the terminal device further determines, based on the status of the first multicast service and/or the configuration information of the first multicast service in the second cell, whether to send the first request information to the second cell.

It should be understood that the second information may directly indicate that the second cell does not support a multicast service in the non-connected state, or the second information may indicate that the second cell supports a multicast service in the non-connected state, but a multicast service that is in the non-connected state and that is provided by the second cell does not include the first multicast service. This is not limited in this application.

With reference to the first aspect, in some possible implementations, when the second information includes configuration information of a multicast control channel MCCH of the second cell, the terminal device obtains third information based on the configuration information of the MCCH, where the third information includes MCCH information of the second cell, and the MCCH information does not include the identifier of the first multicast service, or the terminal device fails to obtain the third information based on the configuration information of the MCCH. Based on the foregoing solution, if the second information includes the configuration information of the MCCH of the second cell, it indicates that the second cell supports the multicast service in the non-connected state. The terminal device obtains the third information based on the configuration information of the MCCH, where the third information includes the MCCH information. If the MCCH information does not include the identifier of the first multicast service, it indicates that the second cell supports the multicast service in the non-connected state, but the second cell does not provide the first multicast service to the terminal device in the non-connected state. Alternatively, if the second information received by the terminal device includes the configuration information of the MCCH, but the terminal device fails to obtain the third information based on the configuration information of the MCCH, it indicates that the second cell does not provide a multicast service for the terminal device in the non-connected state.

With reference to the first aspect, in some possible implementations, the first information is carried in at least one of the following messages: a paging paging message, a system information block SIB, and MCCH information. Based on the foregoing solution, the first information is carried in at least one message of the paging paging message, the system information block SIB, and the MCCH information and sent to the terminal device. The terminal device can receive the first information without entering the connected state.

Optionally, the terminal device may obtain the first information when the terminal device is in the connected state, or obtain the first information by using an RRC release message (RRC release message). This is not limited in this application.

With reference to the first aspect, in some possible implementations, when the first information is related to the configuration information of the first multicast service in the second cell, the first information includes PDCP synchronization information of the second cell and/or PDCP synchronization information of the first cell, and the synchronization information includes that PDCP is synchronized or not synchronized.

Based on the foregoing solution, when the first information is related to the configuration information of the first multicast service in the second cell, the first information may further include the PDCP synchronization information of the second cell and/or the PDCP synchronization information of the first cell, and the synchronization information includes that PDCP of the second cell is synchronized or not synchronized and/or that PDCP of the first cell is synchronized or not synchronized. The terminal device further determines a PDCP layer processing method based on the PDCP synchronization information of the second cell and/or the PDCP synchronization information of the first cell.

With reference to the first aspect, in some possible implementations, when the synchronization information includes that the PDCP of the second cell and/or the PDCP of the first cell is not synchronized, the terminal device resets a PDCP entity or a PDCP variable, and/or the terminal device discards a buffered PDCP data packet or delivers a buffered PDCP data packet to a higher layer.

Based on the foregoing solution, when the PDCP of the second cell is not synchronized and/or the PDCP of the first cell is not synchronized, the terminal device may reset the PDCP entity or the PDCP variable, and/or the terminal device discards the buffered PDCP data packet or delivers the buffered PDCP data packet to the higher layer.

Optionally, when the PDCP of the second cell is not synchronized and/or the PDCP of the first cell is not synchronized, the terminal device sends the first request information to the second cell, and after the terminal device and the second cell enter the connected state, the terminal device receives a PDCP configuration in the second cell.

According to a second aspect, a communication method is provided. The method includes: A first cell determines first information, where the first information is related to a status of a first multicast service. The first cell sends the first information to the terminal device, where the first information is used to determine whether the terminal device sends first request information to a second cell, and the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from the first cell to the second cell.

It should be understood that all steps and processing processes of the first cell in this application may be performed by a first network device serving the first cell.

With reference to the second aspect, in some possible implementations, the status of the first multicast service includes an activated state or a deactivated state.

With reference to the second aspect, in some possible implementations, the first cell sends second information to the terminal device, where the second information is used to determine that the second cell does not provide the first multicast service for the terminal device in the non-connected state.

With reference to the second aspect, in some possible implementations, the first information is carried in at least one of the following messages: a paging paging message, a system information block SIB, and MCCH information.

Based on the foregoing solution, the first information is carried in at least one message of the paging paging message, the system information block SIB, and the MCCH information and sent to the terminal device. The terminal device can receive the first information without entering a connected state.

Optionally, the terminal device may obtain the first information when the terminal device is in the connected state, or obtain the first information by using an RRC release message (RRC release message). This is not limited in this application.

According to a third aspect, a communication method is provided. The method includes: A second cell determines second information, where the second information is used to determine that the second cell does not provide a first multicast service for a terminal device in a non-connected state. The second cell sends the second information to the terminal device. The terminal device is a terminal device that receives the first multicast service, the terminal device is a terminal device in a radio resource control RRC non-connected state, and the terminal device is a terminal device that performs handover or reselection from the first cell to the second cell.

It should be understood that all steps and processing processes of the second cell in this application may be performed by a second network device serving the second cell.

With reference to the third aspect, in some possible implementations, the second cell sends third information to the terminal device, where the third information includes MCCH information of the second cell, and the MCCH information does not include an identifier of the first multicast service.

With reference to the third aspect, in some possible implementations, the second cell sends configuration information of the first multicast service in the second cell to a first network device, where the configuration information is used to determine first information. The first cell and the second cell are neighboring cells, the second cell is a cell within a range of the first cell, or the first cell and the second cell are cells in a same RNA.

With reference to the third aspect, in some possible implementations, the second cell sends PDCP synchronization information of the second cell to the first network device, where the synchronization information includes that PDCP is synchronized or not synchronized.

According to a fourth aspect, a communication method is provided. The method includes: A first network device determines first information, where the first information is related to configuration information of a first multicast service in a second cell. The first network device sends the first information to the terminal device, where the first information is used to determine whether the terminal device sends first request information to the second cell, and the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from the first cell to the second cell.

With reference to the fourth aspect, in some possible implementations, the first network device receives the configuration information of the first multicast service in the second cell, where the configuration information is used to determine the first information.

With reference to the fourth aspect, in some possible implementations, the first information includes PDCP synchronization information of the second cell, and the synchronization information includes that PDCP is synchronized or not synchronized.

With reference to the fourth aspect, in some possible implementations, the first information is carried in at least one of the following messages: a paging paging message, a system information block SIB, and MCCH information.

Based on the foregoing solution, the first information is carried in at least one message of the paging paging message, the system information block SIB, and the MCCH information and sent to the terminal device. The terminal device can receive the first information without entering a connected state.

Optionally, the terminal device may obtain the first information when the terminal device is in the connected state, or obtain the first information by using an RRC release message (RRC release message). This is not limited in this application.

According to a fifth aspect, a communication apparatus is provided. A transceiver unit receives first information, where the first information is related to a status of a first multicast service, and/or the first information is related to configuration information of the first multicast service in a second cell. A processing unit determines, based on the first information, whether to send first request information to the second cell, where the first request information is used by the terminal device to establish or resume an RRC connection. The transceiver unit is a transceiver unit that receives the first multicast service, the transceiver unit and the processing unit are terminal devices in a radio resource control RRC non-connected state, and the terminal device is a terminal device that performs handover or reselection from a first cell to the second cell.

With reference to the fifth aspect, in some possible implementations, that the processing unit determines, based on the first information, whether to send the first request information to the second cell includes: When the status of the first multicast service is an activated state, the transceiver unit sends the first request information to the second cell, or when the status of the first multicast service is a deactivated state, the processing unit remains in the non-connected state.

With reference to the fifth aspect, in some possible implementations, that the processing unit determines, based on the first information, whether to send the first request information to the second cell includes: When configuration information of a first multicast service in the first cell is different from that in the second cell, the transceiver unit sends the first request information to the second cell, or when configuration information of a first multicast service in the first cell is the same as that in the second cell, the processing unit remains in the non-connected state.

With reference to the fifth aspect, in some possible implementations, that the processing unit determines, based on the first information, whether to send the first request information to the second cell includes: When the configuration information of the first multicast service in the first cell is the same as that in the second cell, and the status of the first multicast service is the activated state, the transceiver unit sends the first request information to the second cell, or when the configuration information of the first multicast service in the first cell is the same as that in the second cell, and the status of the first multicast service is a deactivated state, the processing unit remains in the non-connected state.

With reference to the fifth aspect, in some possible implementations, the transceiver unit receives a first paging message, where the first paging message includes an identifier of the first multicast service.

With reference to the fifth aspect, in some possible implementations, the transceiver unit receives second information, where the second information is used to determine that the second cell does not provide the first multicast service for the terminal device in the non-connected state.

With reference to the fifth aspect, in some possible implementations, when the second information includes configuration information of a multicast control channel MCCH of the second cell, the processing unit obtains third information based on the configuration information of the MCCH, where the third information includes MCCH information of the second cell, and the MCCH information does not include the identifier of the first multicast service, or the terminal device fails to obtain the third information based on the configuration information of the MCCH.

With reference to the fifth aspect, in some possible implementations, the first information is carried in at least one of the following messages: a paging paging message, a system information block SIB, and MCCH information.

With reference to the fifth aspect, in some possible implementations, when the first information is related to the configuration information of the first multicast service in the second cell, the first information includes PDCP synchronization information of the first cell and/or PDCP synchronization information of the second cell, and the synchronization information includes that PDCP is synchronized or not synchronized.

With reference to the fifth aspect, in some possible implementations, when the synchronization information includes that PDCP of the first cell and/or PDCP of the second cell is not synchronized, the processing unit resets the PDCP entity or the PDCP variable, and/or the processing unit discards a buffered PDCP data packet or delivers a buffered PDCP data packet to a high layer.

According to a sixth aspect, a communication apparatus is provided. A processing unit determines first information, where the first information is related to a status of a first multicast service. A transceiver unit sends the first information to a terminal device, where the first information is used to determine whether the terminal device sends first request information to a second cell, and the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from the first cell to the second cell.

With reference to the sixth aspect, in some possible implementations, the status of the first multicast service includes an activated state or a deactivated state.

With reference to the sixth aspect, in some possible implementations, the processing unit sends second information to the terminal device, where the second information is used to determine that the second cell does not provide the first multicast service for the terminal device in the non-connected state.

With reference to the sixth aspect, in some possible implementations, the second information includes configuration information of a multicast control channel MCCH of the second cell.

With reference to the sixth aspect, in some possible implementations, the first information is carried in at least one of the following messages: a paging paging message, a system information block SIB, and MCCH information.

Optionally, the transceiver unit may obtain the first information in a connected state, or obtain the first information by using an RRC release message. This is not limited in this application.

According to a seventh aspect, a communication apparatus is provided. A processing unit determines second information, where the second information is used to determine that a second cell does not provide a first multicast service for a terminal device in a non-connected state. A transceiver unit sends the second information to the terminal device. The terminal device is a terminal device that receives the first multicast service, the terminal device is a terminal device in a radio resource control RRC non-connected state, and the terminal device is a terminal device that performs handover or reselection from a first cell to the second cell.

With reference to the seventh aspect, in some possible implementations, the processing unit sends third information to the terminal device, where the third information includes MCCH information of the second cell, and the MCCH information does not include an identifier of the first multicast service.

With reference to the seventh aspect, in some possible implementations, the processing unit sends configuration information of the first multicast service in the second cell to a first network device, where the configuration information is used to determine the first information, and the first cell and the second cell are neighboring cells.

With reference to the seventh aspect, in some possible implementations, the processing unit sends PDCP synchronization information of the second cell to the first network device, where the synchronization information includes that PDCP is synchronized or not synchronized.

According to an eighth aspect, a communication method is provided. The method includes: A processing unit determines first information, where the first information is related to configuration information of the first multicast service in a second cell. A transceiver unit sends the first information to a terminal device, where the first information is used to determine whether the terminal device sends first request information to the second cell, and the first request information is used by the terminal device to establish or resume an RRC connection. The terminal device is a terminal device that receives the first multicast service, the terminal device is a terminal device in a radio resource control RRC non-connected state, and the terminal device is a terminal device that performs handover or reselection from a first cell to the second cell.

With reference to the eighth aspect, in some possible implementations, the transceiver unit receives the configuration information of the first multicast service in the second cell, where the configuration information is used to determine the first information.

With reference to the eighth aspect, in some possible implementations, the first information includes PDCP synchronization information of the first cell and/or PDCP synchronization information of the second cell, and the synchronization information includes that PDCP is synchronized or not synchronized.

With reference to the eighth aspect, in some possible implementations, the first information is carried in at least one of the following messages: a paging paging message, a system information block SIB, and MCCH information.

According to a ninth aspect, a communication apparatus is provided. This application provides a communication device. The communication device may be a network device or a terminal device. The communication device includes a transceiver, a processor, and a memory. The processor is configured to control the transceiver to receive and send a signal, the memory is configured to store a computer program, and the processor is configured to: invoke and run the computer program stored in the memory, so that the terminal device performs the method according to any possible implementation of the first aspect, the network device performs the method according to any possible implementation of the second aspect, the network device performs the method according to any possible implementation of the third aspect, or the network device performs the method according to any possible implementation of the fourth aspect.

Specifically, when the terminal device serves as a transmit end of information and/or data, the terminal device performs the communication method according to any one of the first aspect and the possible implementations of the first aspect, to send information and/or data that needs to be sent. When the network device is used as a receive end of information and/or data, the network device may perform the communication method according to any possible implementation of the second aspect to the fourth aspect.

According to a tenth aspect, this application provides a computer-readable storage medium. The computer-readable storage medium stores instructions. When the instructions are run on a computer, the computer is enabled to perform the method according to any possible implementation of the first aspect to the fourth aspect.

According to an eleventh aspect, this application provides a computer program product. The computer program product includes computer program code. When the computer program code is run on a computer, the computer is enabled to perform the method according to any possible implementation of the first aspect to the fourth aspect.

According to a twelfth aspect, this application provides a chip, including a processor. The processor is configured to: read and execute a computer program stored in a memory, to perform the method according to any possible implementation of the first aspect to the fourth aspect. Optionally, the chip further includes a memory, and the memory and the processor are connected to the memory through a circuit or an electric wire.

### BRIEF DESCRIPTION OF DRAWINGS

FIG. 1 is a diagram of an MBS service transmission process according to an embodiment of this application;
FIG. 2 is a schematic flowchart of receiving broadcast data by a terminal device according to an embodiment of this application;
FIG. 3 is a schematic flowchart of RRC establishment/resumption of a terminal device according to an embodiment of this application;
FIG. 4 is a diagram of a terminal handover scenario according to an embodiment of this application;
FIG. 5 is a diagram of another terminal handover scenario according to an embodiment of this application;
FIG. 6 is a diagram of a communication method according to an embodiment of this application;
FIG. 7 is a diagram of another communication method according to an embodiment of this application;
FIG. 8 is a diagram of another communication method according to an embodiment of this application;
FIG. 9 is a diagram of another communication method according to an embodiment of this application;
FIG. 10 is a diagram of another communication method according to an embodiment of this application;
FIG. 11 is a diagram of another communication method according to an embodiment of this application;
FIG. 12 is a diagram of a communication architecture to which an embodiment of this application is applicable;
FIG. 13 is a diagram of another communication method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following describes technical solutions in embodiments of this application with reference to accompanying drawings.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be a user equipment, an access terminal, a subscriber unit, a subscriber station, a mobile station, a remote station, a remote terminal, a mobile device, a user terminal, a terminal, a wireless communication device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN). This is not limited in embodiments of this application.

It should be understood that, in embodiments of this application, the terminal device may be an apparatus configured to implement a function of the terminal device, or may be an apparatus that can support the terminal device in implementing the function, for example, a chip system. The apparatus may be installed in the terminal. In embodiments of this application, the chip system may include a chip, or may include a chip and another discrete component.

A network device in embodiments of this application may be a device configured to communicate with the terminal device. The network device may be a base transceiver station (base transceiver station, BTS) in a global system for mobile communications (global system for mobile communications, GSM) system or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like. This is not limited in embodiments of this application.

It should be understood that, in embodiments of this application, the network device may be an apparatus configured to implement a function of the network device, or may be an apparatus that can support the network device in implementing the function, for example, a chip system. The apparatus may be installed in the network device.

It should be further understood that, a specific structure of an entity for executing a method provided in embodiments of this application is not specifically limited in embodiments shown below, provided that a program that records code of the method provided in embodiments of this application can be run to perform communication according to the method provided in embodiments of this application. For example, the entity for executing the method provided in embodiments of this application may be a terminal device or a network device, or a functional module that is in the terminal device or the network device and that can invoke and execute the program. The embodiments shown in this application may be partially implemented, or may be partially or completely implemented after the embodiments are combined. This is not limited in this application.

It should be noted that all steps and processing processes of a first cell in this application may be performed by a first network device that provides a service in the first cell. Similarly, all steps and processing processes of a second cell in this application may be performed by a second network device that provides a service in the second cell.

For ease of understanding, communication nouns or terms used in embodiments of this application are first explained and described. The communication nouns or terms are also used as a part of invention content of this application.

### 1. Multicast and broadcast service (multicast and broadcast service, MBS)

The multicast and broadcast service MBS is a service oriented to a plurality of terminal devices (for example, a live broadcast service, a public security service, and a batch software update service).

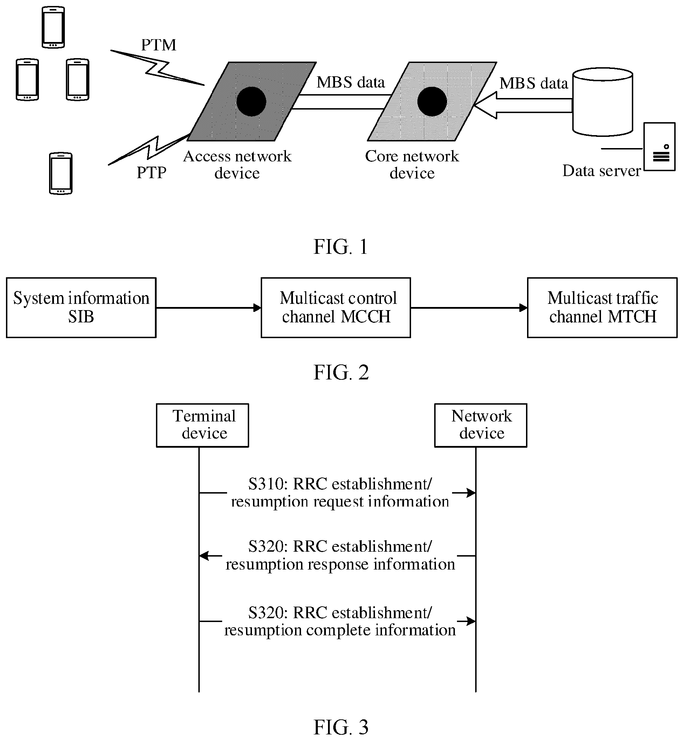

FIG. 1 is a diagram of an MBS service transmission process. An MBS service is from a data server. First, the data server sends MBS data to a core network device, then the core network device sends the MBS data to an access network device, and finally the access network device sends the MBS data to at least one terminal device that receives the MBS service. When the MBS service is sent from a core network to the access network device, transmission of the MBS service is performed by using a common transmission channel MBS session, and each MBS session may include at least one MBS QoS flow. When an MBS data packet is sent from the access network device to the terminal device, transmission of the MBS data packet is performed by using an MBS radio bearer. For one MBS radio bearer, there may be two transmission modes.

In a first mode, a point-to-multipoint (point-to-multipoint, PTM) transmission manner is used.

In a second mode, a point-to-point (point to point, PTP) transmission manner is used.

### 2. Multicast (multicast) service

The multicast service is designed for a service with a high quality of service (quality of service, QoS) requirement. Group management is needed for the multicast service. A same QoS level may be provided for the multicast service and a unicast service. Specifically, for the multicast service, the core network needs to manage joining and exiting of the terminal device. Transmission between the core network and the access network device depends on a PDU session (PDU session), and a new MBS QoS flow data flow is introduced. The access network device supports sending data to the terminal device in the PTP transmission manner and the PTM transmission manner, and supports dynamic switching that is between PTP and PTM and that is controlled by the access network device. In the R17 protocol, the multicast service can be provided only for a terminal device in an RRC-connected state, and the access network device and the core network device need to maintain information about a terminal device corresponding to a multicast service group. In a conventional technology, for the multicast service, MBS session deactivation/activation triggered by a core network is further supported, and the terminal device does not sense a service status.

### 3. Multicast service activation/deactivation procedure

An MBS session deactivation process applies only to the multicast service. The MBS session deactivation procedure is triggered by a multicast/broadcast session management function (multicast/broadcast session management function, MB-SMF), and when the MB-SMF receives a notification from a multicast/broadcast user plane function (multicast/broadcast user plane function, MB-UPF) when no downlink data is available for transmission within a period of time, or when the MB-SMF directly receives a request of an application function (application function, AF) or a network exposure function (network exposure function, NEF). The MBS session deactivation procedure is used to deactivate an MBS data resource of an NG-RAN node. When triggered by a 5GC, the RAN releases a radio resource of a multicast session, and stops transmitting multicast session data to the terminal device. A network device may release an RRC connection of the terminal device to an idle or inactive (idle/inactive) state, or may not release the RRC connection of the terminal device, and the terminal device is not explicitly notified of deactivation.

An MBS session activation process applies only to the multicast service. The MBS session activation process is triggered by the MB-SMF when the MB-SMF receives a notification of downlink MBS data from the MB-UPF or when the MB-SMF receives a request directly from the AF or through the NEF. The MBS session activation procedure is used to activate the MBS data resource of the NG-RAN node. When triggered by the 5GC, establishment of the radio resource of the multicast session is implemented, and transmission of multicast session data to the terminal device starts. A terminal device that is in the RRC-idle state and the RRC-inactive state and that joins the multicast session is paged.

### 4. Broadcast (broadcast) technology

Two logical channels are introduced into the broadcast technology of an NR MBS: a multicast control channel (MBS control channel, MCCH) and a multicast traffic channel (MBS traffic channel, MTCH). The MCCH is used to perform transmission of control information, including configuration information of the MTCH, for example, a G-RNTI and a DRX parameter that correspond to the MTCH. The MCCH is sent periodically. The MTCH logical channel carries user data of a broadcast service. The MTCH is scheduled through the MCCH. A configuration of the MTCH is at a per G-RNTI level, or per MBS service level. The access network device simultaneously schedules service data to a plurality of terminal devices by using a group radio network temporary identifier (group radio network temporary identifier, G-RNT), and each G-RNTI may be associated with at least one broadcast service.

FIG. 2 is a schematic flowchart of receiving broadcast data by a terminal device. A procedure of receiving a broadcast service by the terminal device is that a system is first obtained, where a system message includes control information (that is, configuration information of an MCCH) for transmission of the broadcast service, and a terminal learns, by using the system message, how to receive an MCCH message. The terminal device reads message content of the MCCH based on the configuration information of the MCCH. The MCCH message includes an MBS broadcast configuration message, and MBS broadcast configuration information is configurations necessary for receiving a broadcast service, such as configuration information of an MTCH, a G-RNTI, and a temporary multicast group identifier (temporary multicast group identifier, TMGI). Finally, the terminal device receives broadcast service data on the MTCH based on the configuration information.

### 5. Non-connected state

Radio resource control (radio resource control, RRC) states of the terminal device include an RRC-connected (RRC-connected) state, an RRC-idle (RRC-idle) state, and an RRC-inactive (RRC-inactive) state. The RRC non-connected state in the following embodiments may include at least one of the RRC-idle state or the RRC-inactive state. The RRC non-connected state may be referred to as a non-connected state for short. The RRC-connected state may be referred to as a connected state for short. The RRC-idle state may be referred to as an idle state for short. The RRC-inactive state may be referred to as an inactive state for short. In embodiments of this application, at least one type may be one or more types. A plurality of types may be two, three, or more types. This is not limited.

In the following descriptions, an example in which a network device or an access network device is a base station is used for description. Specifically, in a process in which the terminal device accesses the base station or after the terminal device accesses the base station, the terminal device may perform an RRC establishment process with the base station.

FIG. 3 shows a process of RRC establishment or resumption between a terminal device and a base station.

S310: The terminal device sends RRC establishment/resume request information to a network device.

It should be understood that, in step S310, the terminal device initiates request information (for example, first request information sent by the terminal device to a second cell in this embodiment of this application) for entering a connected state.

S320: The network device sends RRC establishment/resume response information to the terminal device.

Specifically, the network device receives the RRC establishment request information from the terminal device, and the network device sends the RRC establishment response information to the terminal device based on the RRC establishment request information.

It should be understood that the network device receives the RRC resume request information from the terminal device, and the network device sends the RRC resume response information to the terminal device based on the RRC resume request information. Alternatively, the network device receives the RRC resume request information from the terminal device, and the network device sends the RRC establishment response information to the terminal device based on the RRC resume request information, so that the terminal device re-establishes an RRC connection.

S330: The terminal device sends RRC establishment/resume complete information to the network device.

Specifically, the terminal device receives the RRC establishment response information from the network device, and performs RRC establishment based on the RRC establishment response information. After determining that the RRC establishment is completed, the terminal device sends the RRC establishment complete information to the network device.

It should be understood that the terminal device receives the RRC resume response information from the network device, and performs RRC establishment based on the RRC resume response information. After determining that RRC resumption is completed, the terminal device sends the RRC resume complete information to the network device.

In FIG. 3, a simple process of performing RRC establishment/resumption by the terminal device and the network device is described. For detailed descriptions, refer to a conventional technology.

After the terminal device establishes the RRC connection to the base station, an RRC status of the terminal device is an RRC-connected state. Subsequently, the RRC status of the terminal device may be switched between the following states: an RRC-idle state, the RRC-connected state, and an RRC-inactive state.

According to the standard R18, a project has been initiated to decide to study that a multicast service can be provided for a terminal device in an RRC non-connected state, to support the terminal device in receiving the multicast service as much as possible in a network congestion scenario. In the connected state, the multicast service can provide a service to a plurality of terminal devices in a PTM manner. Therefore, a network sends only one copy of data, and the plurality of terminal devices receive the data together. In other words, the multicast service is provided to all terminal devices in the non-connected state, only one copy of data is sent, and there is no need to occupy excessive extra resources.

There are the following two reference manners for providing configuration information of the multicast service in the non-connected state mode to the terminal device:
Manner 1: The terminal device obtains, in the connected state, the configuration information of the multicast service, so that the terminal device continues to receive the multicast service in the non-connected state after an RRC release.
Manner 2: Similar to a manner of a broadcast technology, the network device provides, in an MCCH, the configuration information of the multicast service in the non-connected state, and the configuration information is used by the terminal device to receive data.

It should be understood that the MCCH may be shared with an existing MCCH for broadcast, or may be an MCCH (for example, an MC-MCCH) designed for multicast. This is not limited in this application. The MCCH is used to include multicast configuration information, and a name of the MCCH is not limited in this application. All MCCHs mentioned in embodiments of this application are logical channels used to include multicast configurations.

In both the foregoing two manners, the terminal device in the non-connected state can receive the multicast service. In Manner 1, a service received by the terminal device in the non-connected state cannot directly change configuration information of the service. Compared with the technical solution in Manner 1, the technical solution in Manner 2 is more flexible, and Manner 2 can support the terminal device in obtaining the configuration information at any time. For the solution in Manner 2, if an MCCH read by the terminal device in the non-connected state includes an identifier (for example, a TMGI) of a received service, it may be considered that the network device provides, in the non-connected state, a corresponding service that is in the non-connected state mode; or if an MCCH read by the terminal device in the non-connected state does not include an identifier (for example, a TMGI) of a received service, it may be considered that the network device does not provide, in the non-connected state, a corresponding service that is in the non-connected state mode.

In the existing standard R17 technology, an activated/a deactivated state of the multicast service is notified only by a core network device to an access network device, and is not notified to the terminal device. After the multicast service is deactivated, if there is no data for a long time, the network may decide to release the RRC connection of the terminal device to the RRC-idle state or the RRC-inactive state. In this case, a terminal device in the non-connected state mode needs to perform only a specified operation that needs to be performed by the terminal device in the non-connected state, for example, an operation like measurement, or receiving paging or a system message, and does not need to additionally receive service data. In R18, it is discussed that in a background in which the multicast service is received when the network is in the non-connected state, if the terminal device is released to the non-connected state to receive the multicast service, the terminal device needs to keep monitoring a PDCCH by using a G-RNTI, to read multicast service data. In a scenario in which the multicast service is deactivated, if the core network device triggers a multicast service deactivation procedure to the access network device, the network device stops sending data for a long period of time. However, in this case, if the terminal device keeps monitoring the PDCCH, a large amount of unnecessary energy consumption is also caused. Therefore, in a scenario in which the network is in the non-connected state mode, the multicast service is provided. If the multicast service is in the deactivated state, the terminal device needs to be notified of a status of the corresponding service. The following solutions may be considered for a specific reference manner:
Solution 1: In correspondence to the foregoing Manner 1 and Manner 2, the network device pages the terminal device to enter the connected state and then releases the terminal device. During the release, non-connected-state multicast is not indicated.

In Solution 1, the terminal device does not sense a multicast service status, and the terminal device implements deactivation based on a network indication indicating whether to accept the multicast service in the non-connected state, to achieve an objective of saving electricity. In Solution 1, the terminal device is released immediately after entering the connected state. This causes a waste of access resources. In this solution, the terminal device does not continue to receive the multicast service in the non-connected state. When the service is activated again, the terminal device further needs to be paged to enter the connected state, and obtain the configuration information of the multicast service again. This is opposite to an original purpose of introducing the terminal device in the non-connected state to receive the multicast to relieve network congestion. Instead, Solution 1 needs frequent access of the terminal device.

Solution 2: For Manner 1 and Manner 2, the network device indicates, in the RRC release/connected state/a paging paging message, that the multicast service status is the activated state/deactivated state.

In Solution 2, when the terminal device is in the connected state, the network device indicates that the multicast service status is used to determine, when the network is in the RRC non-connected state, whether to receive data. If the network indicates that the multicast service status is the deactivated state, the terminal device may not monitor the data. When a subsequent multicast service status is the activated state, the terminal device may determine, based on a paging message sent by the network, whether it is a multicast service activation scenario (or whether the terminal device needs to enter the connected state). If the corresponding multicast service is activated or does not need to enter the connected state, the terminal device needs to start to receive the data. Operations of receiving the data by the terminal device also need to be divided into different modes. There are two types of scenarios based on existing discussions: A first type is that all cells in an RNA can provide a corresponding received service for the terminal device, and may provide a same configuration. A second type is that whether a same service and a same configuration need to be provided is limited for no cell in the RNA.

Solution 3: In correspondence to Manner 2, the network device indicates, in the MCCH, that the corresponding status of the multicast service is the activated state or the deactivated state.

In Solution 3, the terminal device may obtain the status of the multicast service at any time. When the terminal device reads that the status of the multicast service is deactivated, the terminal device does not monitor the data. When the status of the multicast service is activated, the terminal device monitors the data. This solution is not limited by whether the RNA provides the same service and the same configuration. The terminal device determines information about a current cell. This is irrelevant to information about another cell.

For example, when an indication manner is explicit indication, for example, when MCCH message content is a TMGI 1, a TMGI 2-deactivated, and a TMGI 3, it can be learned that MCCH information directly indicates that a status of the service TMGI 2 is deactivated.

For another example, when the indication manner is implicit indication, for example, when the MCCH message content is the TMGI 1, the TMGI 2 (which indicates to be received during a release, but is not reflected in the MCCH due to deactivation), and the TMGI 3, it can be learned that the TMGI 2 is not reflected in an MCCH message, in other words, a status of the service is deactivated; or when the MCCH message content is the TMGI 1 (including all configurations), the TMGI 2 (including only partial configurations due to deactivation), and the TMGI 3 (including all configurations), it can be learned that the TMGI 2 includes only the partial configurations in the MCCH, in other words, a status of the service is deactivated.

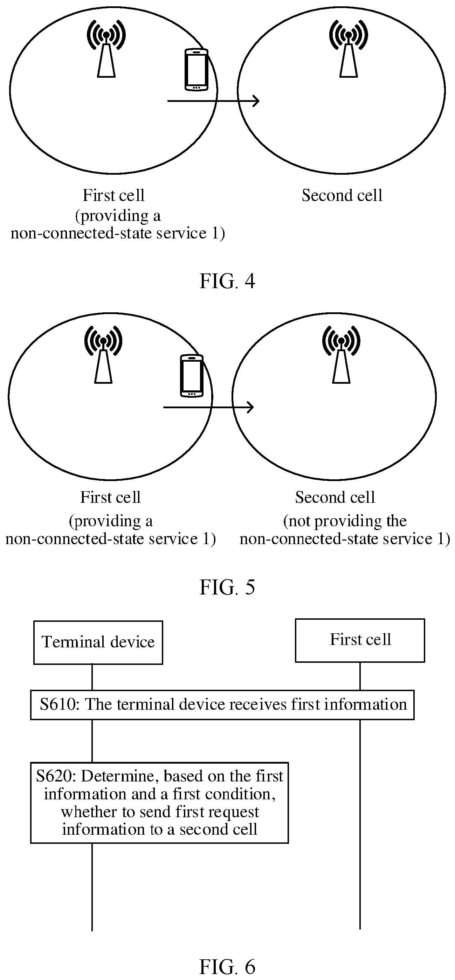

Based on an implementation of Manner 1 of providing a configuration of the multicast service in the non-connected state for the terminal device, as shown in a diagram of a terminal device handover scenario in FIG. 4, the terminal device receives a multicast service 1 in the non-connected state in a first cell, and the terminal device moves from the first cell to a second cell.

It should be understood that the first cell is a source serving cell of the terminal device, and the second cell is a target serving cell of the terminal device.

It should be further understood that in the implementation of Manner 1, in a process in which the terminal device moves from the first cell to the second cell, the following several scenarios may exist.

Scenario 1: If the second cell is a cell outside an RNA of the first cell, or the second cell and the first cell belong to a same RNA, it is not ensured that the same RNA can provide a same service for different cells, and it is not determined whether the second cell can provide a service for the terminal device. Because the terminal device does not determine whether the target serving cell provides a corresponding service, after the terminal device performs handover or reselection to the second cell, the terminal device enters a connected state, and receives a corresponding multicast service or configuration information of the corresponding service.

Scenario 2: If the second cell and the first cell belong to a same RNA, and the RAN provides a same service for the first cell and the second cell, it is not determined whether configurations provided by the RAN for the first cell and the second cell are the same. Because the terminal device has no configuration information, after performing handover or reselection to the second cell, the terminal device needs to enter the connected state, to obtain the configuration information corresponding to a first multicast service (for example, the TMGI 1) of the second cell.

Scenario 3: If the second cell and the first cell belong to a same RNA, and the RAN provides a same service and a same configuration for the first cell and the second cell, after performing handover or reselection from the first cell to the second cell, the terminal device does not need to enter the connected state, and only needs to continue to be in a non-connected state to receive a service.

Based on an implementation of Manner 2 of providing the configuration of the multicast service in the non-connected state for the terminal device, as shown in a diagram of terminal device handover in FIG. 5, a terminal device obtains, in a first cell through an MCCH, configuration information of a to-be-received TMGI 1, and then moves from the first cell to a second cell.

It should be understood that in the implementation of Manner 2, in a process in which the terminal device moves from the first cell to the second cell, the following several scenarios may exist.

Scenario 4: There is no TMGI 1 in an MCCH of the second cell, or there is no MCCH in the second cell. The terminal device may be considered that the second cell does not provide the service TMGI in a non-connected state. Therefore, the terminal device needs to enter a connected state to obtain service data.

Scenario 5: If the MCCH of the second cell includes the TMGI 1, after performing handover or reselection from the first cell to the second cell, the terminal device does not need to enter the connected state, and only needs to remain in the non-connected state.

It can be learned from the foregoing scenarios that in the scenario 1, the scenario 2, and the scenario 4, when the terminal device performs handover or reselection from the first cell to the second cell, the terminal device needs to enter the connected state. It can be learned from an existing deactivation procedure that a network device may release an RRC connection of a terminal device corresponding to a deactivation service. If the service TMGI 1 in the foregoing scenario is the deactivated service, after the terminal device performs handover or reselection to the second cell and enters the connected state, the terminal device may be released to the non-connected state again. Consequently, the terminal device performs handover or reselection to a target serving cell, and unnecessary access is generated, causing a waste of resources.

Based on technical problems found in the foregoing scenario 1, scenario 2, and scenario 4, an embodiment of this application provides a communication method, to resolve how to avoid unnecessary access performed when the terminal device that receives the multicast service in the non-connected state performs handover or reselection from a source serving cell to the target serving cell.

For the foregoing scenario 1, scenario 2, and scenario 4, when the terminal device in the RRC non-connected state performs handover or reselection from the first cell to the second cell, an embodiment of this application provides a diagram of a communication method shown in FIG. 6. The method may include the following steps.

S610: A terminal device receives first information, where the first information is related to a status of a first multicast service, and/or the first information is related to configuration information of the first multicast service in a second cell.

Optionally, the status of the first multicast service includes an activated state or a deactivated state.

Optionally, when the first information is related to the configuration information of the first multicast service in the second cell, a first cell and the second cell are neighboring cells, or the second cell is a cell in an RNA or a tracking area (tracking area, TA), or the second cell is a cell in a specific area. The first information may be an information list of a cell, or the first information is a cell list of information, including related information of the second cell.

It should be understood that the configuration information of the first multicast service in this application may be multicast service configuration information, radio bearer configuration information, or PTM configuration information. This is not limited in this application.

The first information may alternatively be from the first cell and/or a network device (referred to as a first network device in this application) that serves the first cell.

It should be understood that the first network device is a network device that provides a service for the first cell.

Optionally, the first information is carried in at least one of the following messages: a paging paging message, a system information block SIB, and MCCH information.

Optionally, the first information may be alternatively carried in an RRC release message or an RRC reconfiguration message. This is not limited in this application. The RRC release message is used to release the terminal device to a non-connected state.

S620: The terminal device determines, based on the first information, whether to send first request information to the second cell, where the first request information is used to establish or resume an RRC connection.

Specifically, after the terminal device receives the first information, the terminal device determines, based on the first information, whether to send the first request information to the second cell.

Optionally, when the status of the first multicast service in the first information is the activated state, the terminal device sends the first request information to the second cell, where the first request information is used by the terminal device to request to establish or resume the RRC connection.

Optionally, when the status of the first multicast service in the first information is the deactivated state, the terminal device remains in the non-connected state.

Optionally, when configuration information of the first multicast service in the first cell in the first information is different from that in the second cell, the terminal device sends the first request information to the second cell.

Optionally, when the configuration information of the first multicast service in the first cell in the first information is the same as that in the second cell, the terminal device remains in the non-connected state.

Optionally, when the configuration information of the first multicast service in the first cell in the first information is the same as that in the second cell, and the status of the first multicast service is the activated state, the terminal device sends the first request information to the second cell.

Optionally, when the configuration information of the first multicast service in the first cell in the first information is the same as that in the second cell, and the status of the first multicast service is the deactivated state, the terminal device remains in the non-connected state.

It should be understood that, when the terminal device performs handover or reselection from the first cell to the second cell, and continues to remain in the non-connected state, the terminal device may further receive a first paging message. The first paging message includes an identifier of the first multicast service, and the terminal device determines that the first multicast service is activated or the terminal device needs to enter the connected state. For example, the terminal device sends the first request information to the second cell based on the first paging message, to enter the connected state.

According to the method shown in FIG. 6, the method may further include the following.

The terminal device receives second information, where the second information is used to determine that the second cell does not provide the first multicast service for the terminal device in the non-connected state.

It should be understood that the second cell may further directly indicate to the terminal device that the second cell does not provide the first multicast service for the terminal device in the non-connected state, and the terminal device further determines, based on the second information, whether to enter the connected state.

It should be further understood that the terminal device may receive the second information before the terminal device receives the first information, or the terminal device may receive the second information after the terminal device receives the first information. This is not limited in this application.

Optionally, when the second information includes configuration information of an MCCH of the second cell, the terminal device obtains third information based on the configuration information of the MCCH, where the third information includes MCCH information of the second cell, and the MCCH information does not include the identifier of the first multicast service. The terminal device determines that the second cell does not provide the first multicast service for the terminal device in the non-connected state.

Optionally, when the second information includes the configuration information of the MCCH of the second cell, if the terminal device fails to obtain the third information based on the configuration information of the MCCH, it indicates that the MCCH information of the second cell is null, or there is no MCCH information.

The terminal device determines that the second cell supports no multicast service in the non-connected state.

It should be understood that the MCCH/the configuration information of the MCCH in this application is used for multicast transmission.

It should be noted that the first information may further include PDCP synchronization information of the first cell and/or PDCP synchronization information of the second cell, and the synchronization information includes that PDCP of the first cell is synchronized or not synchronized and/or that PDCP of the second cell is synchronized or not synchronized.

It should be understood that, in this application, that PDCP is synchronized means that a network device (for example, a base station) corresponding to the first cell or the second cell generates a PDCP number by using a number in a data packet sent by a core network. That the PDCP is not synchronized means that the network device (for example, the base station) corresponding to the first cell or the second cell does not generate the PDCP number by using the number in the data packet sent by the core network. The number in the data packet sent by the core network may be an MBS QFI SN.

When the first information includes that the PDCP of the first cell is not synchronized and/or the PDCP of the second cell is not synchronized, the terminal device re-establishes a PDCP entity or resets/initializes a PDCP variable, and/or the terminal device discards a buffered PDCP data packet or delivers the buffered PDCP data packet to a high layer, and/or the terminal device sends the first request information to the first cell and/or the second cell, to establish or resume an RRC connection. After entering the connected state, the terminal device receives a PDCP configuration in the first cell and/or the second cell.

It should be understood that, when the terminal device performs handover or reselection from the first cell to the second cell, the second cell may not use a PDCP synchronization mechanism. When the terminal device performs handover or reselection to the second cell, whether a PDCP layer processing mechanism can be continuous needs to be further determined. The first information further indicates PDCP synchronization information of the second cell, and is further used by the terminal device to determine processing on a PDCP layer or the PDCP entity.

In the method shown in FIG. 6, when the terminal device in the RRC non-connected state performs handover or reselection from the first cell to the second cell, the terminal device receives the first information, and determines, based on the first information, whether to send the first request information to the second cell to request to enter the connected state. The first information is related to the status of the first multicast service and/or a configuration of the second cell, and the terminal device further determines whether to continue to remain in the non-connected state or send the first request information to the second cell. In this way, this avoids a case in which the terminal device performs handover or retransmission from the first cell to the second cell, and the terminal device directly sends the first request information to the second cell, to request to establish or resume an RRC-connected state. In this application, the terminal device needs to determine, based on the received first information and a first condition, whether to send the first request information to the second cell. This avoids a problem that the terminal device is quickly released to the non-connected state after the terminal device initiates a request to the second cell and enters the connected state, reducing resource consumption.

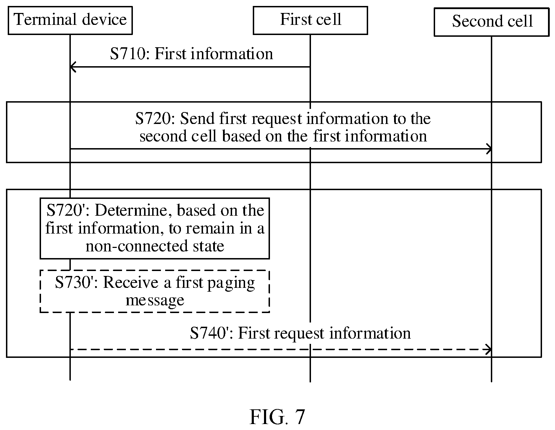

The following describes in detail a specific method for determining, by the terminal device based on the first information, whether to send the first request information to the second cell, when the first information is related to the status of the first multicast service in the foregoing Scenario 1 and Scenario 2. FIG. 7 is a diagram of another communication method according to an embodiment of this application. The method includes the following step:
S710: A terminal device receives first information from a first cell.

Correspondingly, the first cell sends the first information to the terminal device.

Specifically, when the terminal device in a non-connected state performs handover or reselection from the first cell to a second cell, the terminal device receives the first information from the first cell, where the first information indicates a status of the first multicast service. The first multicast service is a multicast service received by the terminal device that is in the non-connected state in the first cell, and the status of the first multicast service includes an activated state or a deactivated state.

The first cell is a source serving cell of the terminal device, and the second cell is a target serving cell to which the terminal device performs handover or reselection.

Optionally, the terminal device obtains the first information by using a paging paging message, a system information block SIB, and an MCCH message.

Optionally, the terminal device obtains the first information by using RRC release information or entering a connected state.

The terminal device determines, based on the first information, whether to send first request information to the second cell. A specific determining basis is that the status of the first multicast service is the activated state or the deactivated state. Details are as follows.

Case 1: The status of the first multicast service in the first information is the activated state.

According to the method shown in FIG. 7, the method further includes the following step:
S720: The terminal device sends the first request information to the second cell based on the first information.

Correspondingly, the second cell receives the first request information from the terminal device.

The status of the first multicast service is the activated state, and the terminal device sends the first request information to the second cell.

Specifically, the terminal device receives the first multicast service from the first cell, and the status of the first multicast service may be the activated state or the deactivated state. When the status of the first multicast service is the activated state, the terminal device performs handover or reselection from the first cell to the second cell, and the terminal device sends the first request information to the second cell.

For example, the terminal device initiates an RRC resumption/establishment procedure to enter the connected state. Based on the foregoing Scenario 1 and Scenario 2, the second cell provides the first multicast service only in the connected state, or the second cell has not provided the first multicast service, and needs to trigger establishment of the service after entering the connected state.

In the foregoing Scenario 1 and Scenario 2, when the terminal device does not determine that the second cell provides a corresponding multicast service and/or a same configuration, the terminal device directly determines, based on the status of the first multicast service, whether to send the first request information to the second cell to establish/resume an RRC connection.

Case 2: The status of the first multicast service in the first information is the deactivated state.

According to the method shown in FIG. 7, the method further includes the following step:
S720': The terminal device determines, based on the first information, to remain in the non-connected state.

Specifically, the terminal device receives the first information from the first cell, where the first information indicates that the status of the first multicast service is the activated state or the deactivated state. When the status of the first multicast service is the deactivated state, the terminal device performs handover or reselection from the first cell to the second cell, and the terminal device continues to remain in the non-connected state.

For example, the terminal device does not initiate the RRC resumption/establishment procedure, to avoid being released after entering the connected state. The terminal device remains in the non-connected state, and waits for a subsequent activation procedure to initiate a paging request. According to the method shown in FIG. 7, the method further includes the following step:
S730': The terminal device receives a first paging message.

When the terminal device receives the first paging message, the terminal device determines, based on the first paging message, whether to enter the connected state. When the first paging message is paging for service activation, the terminal device does not send the first request information to the second cell. When the first paging message includes an identifier of the first multicast service, the terminal device determines that the first multicast service is activated or the terminal device needs to enter the connected state. For example, the terminal device sends the first request information to the second cell based on the first paging message, to enter the connected state.

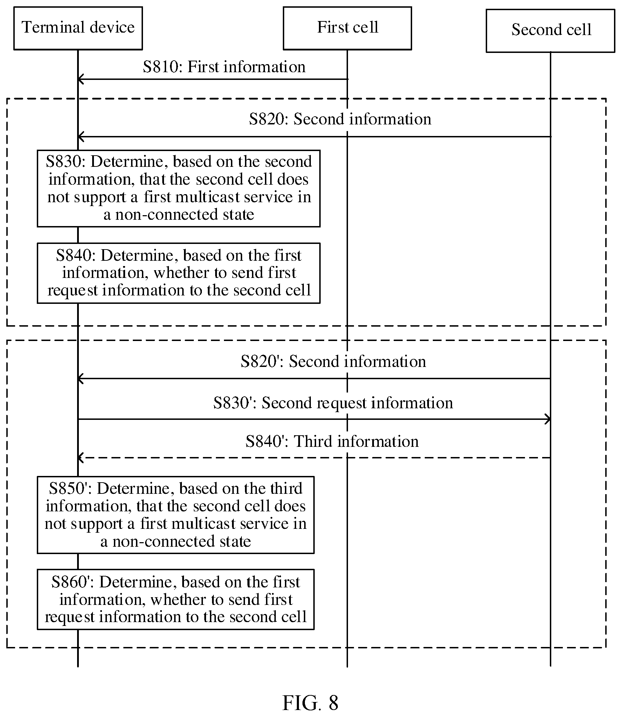

Specifically, after subsequent paging reaches the terminal device, because the terminal device does not determine whether the second cell and the first cell have same configuration information of the first multicast service, the terminal device needs to initiate the RRC resumption/establishment procedure to enter the connected state, and obtain configuration information of the first multicast service in the second cell. When the terminal device determines that the configuration information of the first multicast service in the second cell is the same as configuration information of the first multicast service in the first cell, the terminal device performs the method shown in FIG. 8. For details, refer to detailed descriptions in FIG. 8. Details are not described herein again.

It should be understood that when the terminal device is in the non-connected state in the first cell, a received service may include a plurality of services. When the plurality of services include a service in the activated state, the terminal device needs to send the first request information to the second cell, to resume or establish the RRC connection. In the method shown in FIG. 7, the method further includes the following step:
S740': The terminal device sends the first request information to the second cell.

Correspondingly, the second cell receives the first request information from the terminal device.

The first request information is used to establish or resume the RRC connection.

In the method shown in FIG. 7, when the terminal device in the non-connected state performs handover or reselection from the first cell to the second cell, the terminal device does not need to determine, based on whether the second cell and the second cell belong to a same RAN, and/or whether the second cell and the first cell support a same service, and/or whether configuration information of services corresponding to the second cell and the first cell is the same, whether there is a need to enter the connected state, and the terminal device directly determines, based on the status of the first multicast service in the first information, whether to send the first request information to the second cell. When the status of the first multicast service is the activated state, the terminal device sends the first request information to the second cell. When the status of the first multicast service is the deactivated state, the terminal device remains in the non-connected state, waits to be woken up through paging, and then sends the first request information to the second cell. According to the method shown in FIG. 7, a problem that the terminal device determines, based on whether the first cell and the second cell belong to the same RAN, and/or whether supported services are the same, and/or whether the configuration information of corresponding services is the same, that the terminal device is quickly released to the non-connected state after entering the connected state in the second cell is avoided, reducing resource consumption.

For the foregoing Scenario 4, FIG. 8 is a diagram of another communication method according to an embodiment of this application. As shown in FIG. 8, the method may include the following steps.

S810: A terminal device receives first information.

The first information is from a first cell. The first information includes a status of a first multicast service.

Step S810 is similar to step S710 shown in FIG. 7. For details, refer to the descriptions in S710. Details are not described herein again.

The terminal device may further receive second information from a second cell, where the second information indicates that the second cell does not provide the first multicast service for a terminal device in a non-connected state.

It should be understood that the second information may directly indicate that the second cell does not provide the first multicast service for the terminal device in the non-connected state, or the second information may indirectly indicate that the second cell does not provide the first multicast service in the non-connected state (in other words, the second cell supports a multicast service in the non-connected state, but the supported multicast service in the non-connected state does not include the first multicast service). For example, the second information does not include related information of an MCCH (for example, configuration information of the MCCH). To be specific, the second information indicates that the second cell does not provide the first multicast service for the terminal device in the non-connected state. The second information includes the configuration information of the MCCH of the second cell. The first cell obtains third information based on the MCCH configuration information. The third information includes MCCH information of the second cell, and the MCCH information of the second cell does not include an identifier of the first multicast service. In other words, the second cell does not provide the first multicast service in the non-connected state. The second information includes the configuration information of the MCCH of the second cell. If the first cell fails to obtain the third information based on the MCCH configuration information, it is considered that the second cell does not provide the first multicast service for the terminal device in the non-connected state.

Based on possible cases of the second information, the following separately describes in detail a case in which the second information directly indicates that the second cell does not provide the first multicast service to the terminal device in the non-connected state, and a case in which the second information may indirectly indicate that the second cell does not provide the first multicast service in the non-connected state.

### Case 1:

S820: The terminal device receives the second information from the second cell.

Correspondingly, the second cell sends the second information to the terminal device.

The second information indicates that the second cell does not provide the first multicast service for the terminal device in the non-connected state.

Optionally, the second information may directly indicate that the second cell does not provide the first multicast service for the terminal device in the non-connected state, or the second information may indicate that the second cell does not provide the first multicast service in the non-connected state.

S830: The terminal device determines, based on the second information, that the second cell does not provide the first multicast service for the terminal device in the non-connected state.

Specifically, after receiving the second information from the second cell, the terminal device determines, based on the second information, that the second cell does not provide the first multicast service in the non-connected state. According to the method shown in FIG. 8, the method further includes the following steps.

S840: The terminal device determines, based on the first information, whether to send first request information to the second cell.

Specifically, when the terminal device determines that the second cell does not provide the first multicast service for the terminal device in the non-connected state, the terminal device determines, based on the first information, whether to send the first request information to the second cell, where the first request information is used to establish or resume an RRC connection.

It should be understood that, in step S840, the terminal device determines, based on the first information, whether to send the first request information to the second cell. For details, refer to the detailed descriptions of Case 1 and Case 2 shown in FIG. 7. To avoid redundancy, details are not described herein again.

### Case 2:

S820': The terminal device receives the second information from the second cell.

Correspondingly, the second cell sends the second information to the terminal device.

The second information indicates that the second cell does not provide the first multicast service for the terminal device in the non-connected state.

Optionally, the second information includes the configuration information of the MCCH of the second cell.

S830': The terminal device sends second request information to the second cell.

Specifically, when the terminal device receives the second information of the second cell, where the second information includes the configuration information of the MCCH of the second cell, the terminal device sends the second request information to the second cell. The second request information is used to obtain the MCCH information of the second cell based on the configuration information of the MCCH.

Optionally, when the second cell includes the MCCH information, that is, the method shown in FIG. 8, the method further includes the following.

S840': The terminal device receives the third information from the second cell, or the second cell sends the third information to the terminal device.

Specifically, when the second cell receives the second request information from the terminal device, the second cell sends the third information to the terminal device based on the second request information. The third information includes the MCCH information of the second cell.

Optionally, when the MCCH information in the third information does not include the identifier of the first multicast service, the terminal device determines that the second cell does not provide the first multicast service for the terminal device in the non-connected state.

S850': The terminal device determines, based on the third information, that the second cell does not provide the first multicast service for the terminal device in the non-connected state.

It should be understood that the terminal device sends the second request information to the second cell, and the terminal device may not receive the third information, in other words, the MCCH information of the second cell is empty or there is no MCCH information. In other words, step S840' and step 850' are optional.

S860': The terminal device determines, based on the first information, whether to send the first request information to the second cell.

Specifically, when the terminal device determines that the second cell does not provide the first multicast service for the terminal device in the non-connected state, the terminal device determines, based on the first information, whether to send the first request information to the second cell, where the first request information is used to establish or resume the RRC connection.

It should be understood that, in step S860', the terminal device determines, based on the first information, whether to send the first request information to the second cell. For details, refer to the detailed descriptions of Case 1 and Case 2 shown in FIG. 7. To avoid redundancy, details are not described herein again.

It should be noted that steps S820 and S820' shown in FIG. 8 are not limited to be performed after step S810. Step S820 and step S820' may alternatively be performed before step S810. This is not limited in this application.

According to the method shown in FIG. 8, when the terminal device in the non-connected state performs handover or retransmission from the first cell to the second cell, the terminal device receives the second information from the second cell, where the second information is used to determine that the second cell does not provide the first multicast service to the terminal device in the non-connected state. The terminal device determines, based on a status of the first multicast service, whether to send the first request information to the second cell. When the second information received by the terminal device includes the MCCH configuration information of the second cell, the terminal device obtains service information of the MCCH of the second cell based on the MCCH configuration information. The terminal device further determines, based on the service information, whether the second cell supports the first multicast service in the non-connected state. When the terminal device determines that the second cell does not provide the first multicast service for the terminal device in the non-connected state, or the second cell does not provide multicast in the non-connected state, the terminal device sends the first request information to the second cell based on the status of the first multicast service, to establish or resume the RRC connection, or the terminal device waits to be woken up through paging.

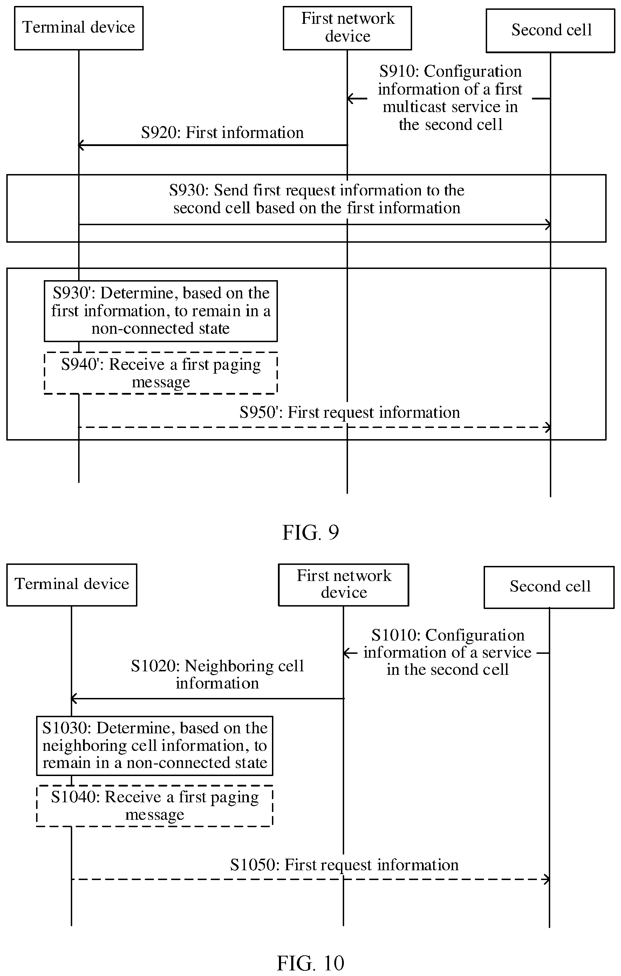

FIG. 9 is a schematic flowchart of another communication method according to an embodiment of this application. The method is applicable to any one of the foregoing scenarios 1 to 5. FIG. 9 shows a specific method in which a terminal device determines, based on first information, whether to send first request information to a second cell when the first information is related to configuration information of a first multicast service in the second cell. According to the method shown in FIG. 9, the method includes the following.

S910: A first network device receives the configuration information of the first multicast service in the second cell.

Correspondingly, the second cell sends the configuration information of the first multicast service in the second cell to the first network device.

Information exchange between the first network device and the second cell may be performed through an Xn interface.

Specifically, the first network device determines, based on the configuration information of the first multicast service in the second cell, that configuration information of the first cell is the same as or different from a configuration of the second cell. The first network device determines the first information based on the configuration information of the first multicast service in the second cell, and sends the first information to the terminal device, so that the terminal device determines whether to send the first request information to the second cell.

The first network device is a network device serving the first cell, and the first cell and the second cell are neighboring cells, or the second cell is a cell within a range of the first cell, or the first cell and the second cell are cells in a same RNA.

Optionally, the configuration information of the first multicast service in the second cell may include a PTM configuration of the second cell. The PTM configuration may include information such as a G-RNTI, a logical channel identifier (logical channel ID, LCID), discontinuous reception (discontinuous reception, DRX), and a downlink shared channel (physical downlink shared channel, PDSCH) configuration.

Optionally, the configuration information of the first multicast service in the second cell includes one or more of the following: identification information (for example, a TMGI 1) of the first multicast service, the configuration information (the configuration information may be carried in information such as radio bearer configuration information, PTM configuration information, and multicast service configuration information) of the first multicast service in the second cell, and that PDCP is synchronized or not synchronized.

Optionally, the configuration information of the first multicast service in the second cell may further include a PDCP SN generated by the second cell using a synchronization mechanism, or the second cell does not use a synchronization mechanism. When PDCP of the first cell and/or PDCP of the second cell is not synchronized, the terminal device causes a processing exception (for example, a packet loss or a data packet disorder) based on an existing PDCP mechanism. The first information may further notify the terminal device of whether the PDCP is synchronized, so that the terminal device determines processing on a PDCP layer/PDCP entity.

It should be noted that before step S910, the first network device may send third request information to the second cell through the Xn interface, where the third request information is used to request to obtain a configuration of the second cell. The third request information may include one or more of the following: an identifier of the first multicast service, a second cell identifier, configuration query indication information of the first multicast service in the second cell, PDCP synchronization query indication information, and the like. The second cell sends the configuration information of the first multicast service in the second cell to the first network device based on the third request information.

Optionally, the configuration information of the first multicast service in the second cell includes one or more of the following: the identification information of the first multicast service (for example, the TMGI 1), the configuration information of the second cell, the PTM configuration information, and that the PDCP is synchronized or not synchronized. The case in which the PDCP is synchronized or not synchronized may be at a service level, a cell level, or a base station level. This is not limited in this application.

It should be further noted that when both a serving network device of the second cell and a serving network device of the first cell are the first network device, step S910 is an optional step.

S920: The terminal device receives the first information from the first network device.

Correspondingly, the first network device sends the first information to the terminal device.

Specifically, when a terminal device in a non-connected state performs handover or reselection from the first cell to the second cell, the terminal device receives the first information from the first network device, where the first information is related to the configuration information of the first multicast service in the second cell.

The terminal device determines, based on the first information, whether to send the first request information to the second cell.

Optionally, when configuration information of the first multicast service in the first cell in the first information is different from that in the second cell, the terminal device sends the first request information to the second cell.

Optionally, when the configuration information of the first multicast service in the first cell in the first information is the same as that in the second cell, the terminal device remains in the non-connected state. Details are as follows.

Case 1: The configuration information of the first multicast service in the first cell in the first information is different from that in the second cell.

According to the method shown in FIG. 9, the method further includes the following step:
S930: The terminal device sends the first request information to the second cell based on the first information.

Correspondingly, the second cell receives the first request information from the terminal device.

The configuration information of the first multicast service in the first cell in the first information is different from that in the second cell, and the terminal device sends the first request information to the second cell.

Case 2: The configuration information of the first multicast service in the first cell is the same as that in the second cell.

According to the method shown in FIG. 9, the method further includes the following steps.

S930': The terminal device determines, based on the first information, to remain in the non-connected state.

Specifically, the terminal device receives the first information from the first cell, where the configuration information of the first multicast service in the first cell in the first information is the same as that in the second cell. The terminal device performs handover or reselection from the first cell to the second cell, and the terminal device continues to remain in the non-connected state.

It should be understood that when the first information is related to a status of the first multicast service and the configuration information of the first multicast service in the second cell, when the configuration information of the first multicast service in the first cell in the first information is the same as that in the second cell, and the status of the first multicast service is a deactivated state, the terminal device sends the first request information to the second cell.

It should be further understood that when the configuration information of the first multicast service in the first cell in the first information is the same as that in the second cell, and the status of the first multicast service is the deactivated state, the terminal device remains in the non-connected state.

S940': The terminal device receives a first paging message.

When the terminal device receives the first paging message, the terminal device determines, based on the first paging message, whether to enter a connected state. When the first paging message is paging for service activation, the terminal device does not send the first request information to the second cell. When the first paging message includes the identifier of the first multicast service, the terminal device determines that the first multicast service is activated or the terminal device needs to enter the connected state. According to the method shown in FIG. 9, the method further includes the following step:
S950': The terminal device sends the first request information to the second cell.

Correspondingly, the second cell receives the first request information from the terminal device.

The first request information is used to establish or resume an RRC connection.

In the method shown in FIG. 9, when the terminal device in the RRC non-connected state performs handover or reselection from the first cell to the second cell, the terminal device receives the first information determined by the first network device. The first information is related to the configuration information of the first multicast service in the second cell. The terminal device further determines, based on the first information, whether to send the first request information to the second cell. According to the method shown in FIG. 9, a problem that the terminal device determines, based on whether the first cell and the second cell belong to a same RAN, and/or whether supported services are the same, and/or whether the configuration information of corresponding services is the same, that the terminal device is quickly released to the non-connected state after entering the connected state in the second cell is avoided, reducing resource consumption.

In the method shown in FIG. 9, the first information is related to the configuration information of the first multicast service in the second cell. The terminal device determines, based on the first information, that the configuration information of the first multicast service in the first cell is the same as or different from that in the second cell, and further determines to send the first request information to the second cell or remain in the non-connected state.

When the first information received by the terminal device from the first network device is neighboring cell information, the terminal device further determines, based on the neighboring cell information, whether to send the first request information to the second cell. In the method shown in FIG. 10, the method includes the following steps.

S 1010: A first network device receives configuration information of a service in a second cell.

Correspondingly, the second cell sends the configuration information of the service in the second cell to the first network device.

Information exchange between the first network device and the second cell may be performed through an Xn interface.

It should be understood that the configuration information of the service includes configuration information of all services in the second cell, or the configuration information of the service includes configuration information of the first multicast service.

S 1020: The first network device sends neighboring cell information to a terminal device.

Correspondingly, the terminal device receives the neighboring cell information from the first network device.

Optionally, the neighboring cell information may be alternatively carried in an RRC release message, and the RRC release message is used to release the terminal device to a non-connected state.

It should be understood that the first network device sends an RRC release message to the terminal device, and the RRC release message releases the terminal device to the non-connected state. The neighboring cell information may be carried in the RRC release message sent by the first network device to the terminal device.

Specifically, after receiving the configuration information of the service in the second cell, the first network device determines the neighboring cell information based on the configuration information of the service in the second cell. The neighboring cell information includes the configuration information of all the services in the second cell.

S 1030: The terminal device determines, based on the neighboring cell information, to remain in the non-connected state.

Specifically, when the terminal device receives the neighboring cell information from the first network device, where the neighboring cell information includes the configuration information of all the services in the second cell, or the neighboring cell information includes the configuration information of the first multicast service in the second cell, the terminal device remains in the non-connected state.

When the neighboring cell information does not include related information of the second cell, the terminal device performs handover or reselection from the first cell to the second cell, and the terminal device needs to send the first request information to the second cell, to enter a connected state.

S 1040: The terminal device receives a first paging message.

The terminal device receives the first paging message.

When the terminal device receives the first paging message, the terminal device determines, based on the first paging message, whether to enter the connected state. When the first paging message includes an identifier of the first multicast service, the terminal device determines that the first multicast service is activated or the terminal device needs to enter the connected state. For example, the terminal device sends the first request information to the second cell based on the first paging message, to enter the connected state. According to the method shown in FIG. 10, the method further includes the following.

S1050: The terminal device sends the first request information to the second cell.

Correspondingly, the second cell receives the first request information from the terminal device.

The first request information is used to establish or resume an RRC connection.

In the method shown in FIG. 10, when the terminal device receives the neighboring cell information from the first network device, where the neighboring cell information includes the configuration information of all the services in the second cell, the terminal device determines, based on the neighboring cell information, to remain in the non-connected state.

It should be noted that the first information sent by the first network device to the terminal device shown in FIG. 10 is the neighboring cell information, and the neighboring cell information is not limited to a neighboring cell within a cell range. In this application, the neighboring cell information includes related information that is of all cells and that can be obtained by the first network device, and the related information may be referred to as neighboring cell information. Therefore, the neighboring cell information represents only an information name, but is not limited to related information of a neighboring cell of the first cell. As long as the first network device can obtain related information of a cell, the related information of the cell may be referred to as the neighboring cell information. This is not limited in this application.

According to the foregoing method, after the terminal device receives the configuration information of all the services or the configuration information of the first multicast service in the second cell, the terminal device remains in the non-connected state. After the terminal device receives the first paging message including the identifier of the first multicast service, the terminal device sends the first request information to the second cell, where the first request information is used to establish or resume the RRC connection.

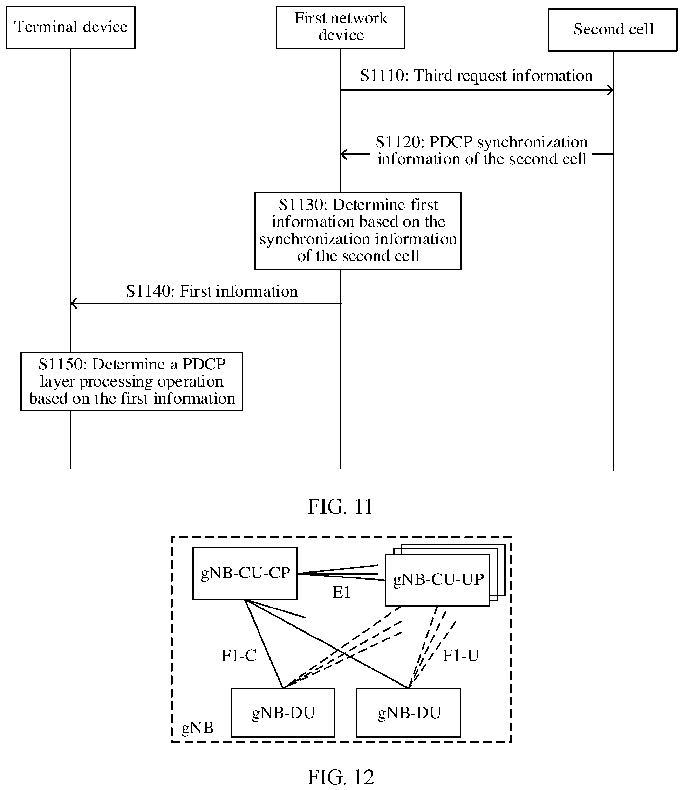

When the terminal device determines, based on the information received from the first network device, whether to enter the connected state, a PDCP window processing mechanism of the first cell and/or a PDCP window processing mechanism of the second cell may also be abnormal. Therefore, the first network device may further notify the terminal device of whether PDCP of the first cell and/or PDCP of the second cell is synchronized, so that the terminal device determines processing on a PDCP layer/PDCP entity. FIG. 11 is a diagram of another communication method according to an embodiment of this application.

As shown in FIG. 11, the method includes the following steps.

S1110: A first network device sends third request information to a second cell.

Correspondingly, the second cell receives the third request information from the first network device.

Specifically, the third request information is used to obtain PDCP synchronization information of the second cell.

Optionally, the third request information includes one or more of the following: an identifier of a first multicast service, a second cell identifier, PTM configuration query indication information, PDCP synchronization query indication information, and the like.

S1120: The first network device receives the PDCP synchronization information from the second cell.

Correspondingly, the second cell sends the PDCP synchronization information of the second cell to the first network device.

Specifically, after the first network device sends the third request information to the second cell, the second cell sends the PDCP synchronization information of the second cell to the first network device.

Optionally, the PDCP synchronization information includes that PDCP of the second cell is synchronized or not synchronized.

The case in which the PDCP is synchronized or not synchronized may be at a service level, a cell level, or a base station level. This is not limited in this application.

It should be noted that information exchange (for example, the third request information) between the first network device and the second cell may be implemented through an Xn interface.

S1130: The first network device determines first information based on configuration information of the first multicast service in the second cell.

Specifically, after receiving the configuration information of the first multicast service in the second cell, the first network device determines the first information based on the configuration information of the first multicast service in the second cell. The first information may be referred to as a neighboring cell information list or other information. This is not limited in this application.

Optionally, the first information includes one or more of the following: the configuration information of the first multicast service in the second cell, service information of the second cell, and that the PDCP of the second cell is synchronized or not synchronized.

The first information may further include related information of each service and common information. A specific representation form is not limited in this application.

S1140: The first network device sends the first information to the terminal device.

Correspondingly, the terminal device receives the first information from the first network device.

In a process of sending the first information to the terminal device, the first network device may send the first information to the terminal device in an RRC release message, send the first information to the terminal device in an MCCH message, or send the first information to the terminal device in a SIB message. This is not limited in this application.

S1150: The terminal device determines a PDCP layer processing operation based on the first information.

Optionally, the terminal device determines, based on whether PDCP of the second cell is synchronized in the first information, whether to initialize the PDCP. When the PDCP of the second cell is not synchronized, the terminal device may reset a PDCP entity or a PDCP variable, and/or clear a buffered data packet or deliver a buffered data packet to a high layer, and/or the terminal device sends first request information to the second cell, where the first request information is used to establish or resume an RRC-connected state. After entering the connected state, the terminal device receives a PDCP configuration in the second cell.

It should be noted that, in the method shown in FIG. 11, when a network device in the second cell and a network device in a first cell are a same network device, steps S1130 to S1150 are directly performed.

It should be further noted that, when PDCP of the first cell is not synchronized, the foregoing step S1130 to step S1150 may also be performed. When the PDCP of the first cell or the PDCP of the second cell is not synchronized, the terminal device may reset the PDCP entity or the PDCP variable, and/or clear the buffered data packet or deliver the buffered data packet to the high layer, and/or the terminal device sends the first request information to the first cell and/or the second cell, where the first request information is used to establish or resume the RRC-connected state. After entering the connected state, the terminal device receives the PDCP configuration in the first cell and/or the second cell.

The method shown in FIG. 11 provides a method for processing the PDCP layer/PDCP entity by the terminal device. The terminal device may further determine the PDCP layer processing operation based on the PDCP synchronization information of the second cell in first information.

FIG. 12 shows a communication architecture to which an embodiment of this application is applicable. FIG. 12 shows a CP-UP split architecture in a network device. In the method, an example in which the network device is a base station (for example, a gNB) is used to describe in detail the method shown in FIG. 12. The gNB may include a gNB-CU-CP, a plurality of gNB-CU-UPs, and a plurality of gNB-DUs. The gNB-CU-CP is connected to the gNB-DU through an F1-C interface, the gNB-CU-UP is connected to the gNB-DU through an F1-U interface, and the gNB-CU-UP is connected to the gNB-CU-CP through an E1 interface.

Specifically, as shown in FIG. 12, one gNB-DU is connected to only one gNB-CU-CP, and one gNB-CU-UP is connected to only one gNB-CU-CP. When the CP-UP split architecture is used on a base station side, if MRB exchange is needed, the gNB-CU-CP of the base station needs to retrieve an MRB progress from the gNB-CU-UP.

In an environment in which a terminal device performs handover from a source base station to a target base station, different from a unicast service, a last data packet that is already sent by an MRB that is on a source base station side to the terminal device cannot be determined. For the MRB, establishment of the F1-U is not necessarily based on a terminal device level, and there is a high probability that the F1-U is established at a distribution unit DU level or a cell cell level. Therefore, how the gNB-CU-CP queries a progress of the gNB-CU-UP for the terminal device is a problem that needs to be resolved.

It should be understood that, from a perspective of a target gNB, the target gNB needs to provide, for the MRB, PDCP SN information of an oldest data packet available to a target NG-RAN node. Therefore, a target gNB-CU-UP needs to provide only an SN of the oldest data packet available to a target gNB-CU-UP side to a source gNB-CU-UP. The SN of the oldest data packet includes information about each MRB, but is not specific information of the terminal device. Therefore, information about an MRB in the source base station may be directly queried.

However, from a perspective of a source gNB-CU-CP, some terminal devices need to retrieve MRB progress information. The MRB progress information includes PDCP SN information of the last data packet that is already delivered to the terminal device for the MRB. From a perspective of a target base station gNB-CU-UP, for some terminal devices, transmission of a data packet is performed through an F1-U tunnel at the DU/cell level (a transmission progress of the data packet represents progresses of a plurality of terminal devices), and for some other terminal devices, the transmission of the data packet is performed through an F1-U tunnel at a terminal device level. Therefore, MRB progress information of a source gNB is specific information of the terminal device. Therefore, how to query the progress information of the MRB is a technical problem that needs to be resolved.

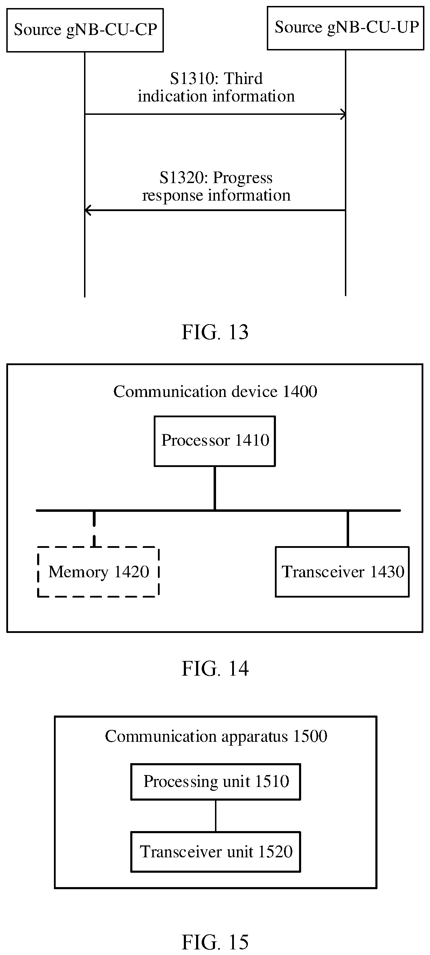

For the foregoing technical problem, FIG. 13 is a diagram of another communication method according to an embodiment of this application. The following describes in detail a solution provided in this application for the foregoing technical problem with reference to the method in FIG. 13.

The method shown in FIG. 13 includes the following steps.

S1310: A source gNB-CU-CP sends third indication information to a source gNB-CU-UP.

Correspondingly, the source gNB-CU-UP receives the third indication information from the source gNB-CU-CP.

The third indication information is used to determine MRB progress information corresponding to a terminal device.

Optionally, the third indication information includes an MBS multicast F1-U context descriptor information element.

Optionally, the third indication information is included in an MC context modification request message. The MC context modification request message may specifically include one or more of the following: a gNB-CU-CP MBS E1AP ID, a gNB-CU-UP MBS E1AP ID, multicast bearer context modification information, and an MRB list.

For example, to retrieve the MRB progress information of the terminal device, the source gNB-CU-CP needs to provide the following information to the source gNB-CU-UP:
1. If a data packet sent by the source gNB-CU-CP to the terminal device is sent through a DU-level F1-U shared tunnel, the source gNB-CU-CP needs to provide information about the DU-level F1-U shared tunnel. The information about the shared tunnel may be explicit or implicit. For example, a branch of a choice may directly indicate the information about the DU-level F1-U shared tunnel, may be an identifier ID of a DU, or may be a source gNB-CU-CP MBS E1AP ID, a source gNB-CU-UP MBS E1AP ID, or the like.
2. If the data packet transmitted by the source gNB-CU-CP to the terminal device is transmitted through a cell-level F1-U shared tunnel, the source gNB-CU-CP needs to provide cell information, for example, may be a CGI or a CGI+DU-ID.
3. If the data packet transmitted by the source gNB-CU-CP to the terminal device is transmitted through a terminal device-level F1 tunnel, the source gNB-CU-CP needs to provide terminal device information, for example, may be a C-RNTI+DU ID or a gNB-CU UE F1AP ID+gNB-DU UE F1AP ID.

It should be understood that no matter what type of tunnel is, the tunnel may be represented by using an MBS multicast F1-U context descriptor. Correspondingly, it may also be understood that this field is the third indication information.

It should be further understood that, each time an F1 tunnel is established, an identifier is introduced. The identifier may be used to identify tunnel information, for example, an F1 tunnel 1 or a tunnel 2. During the query, categories may not be distinguished, and related identification information may be directly carried for the query.

S1320: The source gNB-CU-UP sends progress response information to the source gNB-CU-CP.

Correspondingly, the source gNB-CU-CP receives the progress response information from the source gNB-CU-UP.

The progress response information indicates MRB progress information of each terminal device. The progress response information may alternatively be another information name. This is not limited in this application.

Optionally, the progress response information is included in an MC context modification response message, and the MC context modification response message further includes at least one of the following: a gNB-CU-CP MBS E1AP ID, a gNB-CU-UP MBS E1AP ID, multicast bearer context modification response information, and an MRB list.

In the method shown in FIG. 13, the source gNB-CU-CP sends the third indication information to the source gNB-CU-UP, where the third indication information is used to determine MRB progress information corresponding to the terminal device. The source gNB-CU-UP sends the progress response information to the source gNB-CU-CP, where the progress response information indicates the MRB progress information of each terminal device. The source gNB-CU-CP can determine, by using the method shown in FIG. 13, a progress of an MRB corresponding to each terminal device.

It should be noted that, a specific progress corresponding to the MRB in FIG. 13 may alternatively be a progress with a slowest transmission progress in F1 transmission tunnels that are at different levels and that correspond to the MRB. For example, a progress fed back by a DU-level tunnel is No. 5, and a progress fed back by a terminal device-level tunnel is No. 6. Because the source gNB-CU-UP does not know which tunnel data is received by the terminal device, the source gNB-CU-UP selects a slowest progress and sends the progress to the source gNB-CU-CP. In this manner, this conservative MRB process is used to forward data between the source base station and the target base, no data packet may be missed forwarding. A data packet sent by the target base station to the terminal device is determined based on a PDCP state report reported by the terminal device on a target base station side. Although some more data packets may be forwarded, at least there is no missing transmission and no error.

The foregoing describes in detail a communication method provided in embodiments of this application with reference to FIG. 6 to FIG. 13, and the following describes in detail a communication apparatus provided in embodiments of this application with reference to FIG. 14 and FIG. 15.

The following describes in detail communication apparatuses provided in embodiments of this application with reference to FIG. 14 and FIG. 15. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmitter device or a receiver device may be obtained through division based on the foregoing method examples. For example, each functional module may be obtained through division based on each function, or two or more functions may be integrated into one processing module. The foregoing integrated module may be implemented in a form of hardware, or may be implemented in a form of a software function module. It should be noted that, in embodiments of this application, module division is an example, and is merely a logical function division. In an actual implementation, another division manner may be used. An example in which each functional module is obtained through division based on each corresponding function is used below for description.

FIG. 14 is a block diagram of an example of an information transmission device 1400 according to this application. Any device like a terminal device and a network device in any method in FIG. 6 to FIG. 13 may be implemented by the communication device shown in FIG. 14.

It should be understood that the information transmission device 1400 may be a physical device, may be a component (for example, an integrated circuit or a chip) of a physical device, or may be a functional module in a physical device.

As shown in FIG. 14, the communication device 1400 includes one or more processors 1413. Optionally, the processor 1413 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to: read and write code/data, or the transceiver circuit or the interface circuit may be configured to: transmit or transfer a signal.

Optionally, the interface may be implemented by using a transceiver. Optionally, the information transmission device 1400 may further include a transceiver 1430. The transceiver 1430 may also be referred to as a transceiver unit, a transceiver machine, a transceiver circuit, or the like, and is configured to implement the receiving and sending functions.

Optionally, the communication device 1400 may further include a memory 1420. A specific deployment location of the memory 1420 is not specifically limited in this embodiment of this application. The memory may be integrated into the processor, or may be independent of the processor. For a case in which the device 1400 does not include a memory, it is sufficient that the device 1400 has a processing function, and the memory may be deployed in another location (for example, a cloud system).

The processor 1410, the memory 1420, and the transceiver 1430 communicate with each other through an internal connection path, to transfer a control signal and/or a data signal.

It may be understood that, although not shown, the device 1400 may further include another apparatus, for example, an input apparatus, an output apparatus, or a battery.

Optionally, in some embodiments, the memory 1420 may store executable instructions for performing the method in embodiments of this application. The processor 1410 may execute the instructions stored in the memory 1420, to complete, in combination with other hardware (for example, the transceiver 1430), steps performed in the following method. For specific working processes and beneficial effects, refer to descriptions in the foregoing method embodiments.

The method disclosed in embodiments of this application may be applied to the processor 1410, or may be implemented by the processor 1410. The processor 1410 may be an integrated circuit chip, and has a signal processing capability. In an implementation process, steps of the method may be implemented by using a hardware integrated logical circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processing apparatus may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It can be understood that the memory 1420 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limit ed to, these memories and any memory of another proper type.

FIG. 15 is a block diagram of a communication apparatus 1500 according to this application. The apparatus 1500 includes a transceiver unit 1520, and the transceiver unit 1520 may be configured to implement a corresponding communication function. The transceiver unit 1520 may also be referred to as a communication interface or a communication unit.

Optionally, the apparatus 1500 may further include a processing unit 1510, and the processing unit 1510 may be configured to perform data processing.

Optionally, a specific form of the apparatus 1500 configured to perform information transmission may be a general-purpose computer device or a chip in a general-purpose computer device. This is not limited in this embodiment of this application. As shown in FIG. 15, the apparatus includes the processing unit 1510 and the transceiver unit 1520.

Specifically, the apparatus 1500 may be any device in this application, and may implement functions that can be implemented by the device. It should be understood that the apparatus 1500 may be a physical device, may be a component (for example, an integrated circuit or a chip) of a physical device, or may be a functional module in a physical device.

In a possible design, the apparatus 1500 may be the terminal device (for example, the terminal device) in the foregoing method embodiments, or may be a chip configured to implement a function of the terminal device (for example, the terminal device) in the foregoing method embodiments.

Optionally, the apparatus 1500 further includes a storage unit. The storage unit may be configured to store instructions and/or data. The processing unit 1510 may read the instructions and/or data in the storage unit, so that the apparatus implements actions of different terminal devices in the foregoing method embodiments, for example, an action of a control network element or a terminal device.

The apparatus 1500 may be configured to perform actions performed by the control network element or the terminal device in the foregoing method embodiments. In this case, the apparatus 1500 may be the control network element or the terminal device, or a component of the control network element or the terminal device. The transceiver unit 1520 is configured to perform operations related to sending and receiving of the control network element or the terminal device in the foregoing method embodiments, and the processing unit 1510 is configured to perform operations related to processing of the control network element or the terminal device in the foregoing method embodiments.

It should be understood that the apparatus 1500 may be configured to perform actions performed by the control network element or the network device in the foregoing method embodiments. In this case, the transceiver unit 1520 in the apparatus 1500 may be implemented through a communication interface (for example, a transceiver or an input/output interface), for example, may correspond to the communication interface 1430 shown in FIG. 14. The processing unit 1510 in the apparatus 1500 may be implemented by using at least one processor, for example, may correspond to the processor 1410 shown in FIG. 14.

Optionally, the apparatus 1500 may further include a storage unit. The storage unit may be configured to store instructions or data. The processing unit may invoke the instructions or data stored in the storage unit, to implement a corresponding operation.

It should be understood that a specific process in which the units perform the foregoing corresponding steps is described in detail in the foregoing method embodiments. For brevity, details are not described herein again.

It should be understood that a specific process in which the units perform the foregoing corresponding steps is described in detail in the foregoing method embodiments. For brevity, details are not described herein again.

In addition, in this application, the communication apparatus 1500 is presented in a form of a functional module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1500 may be in the form shown in FIG. 15. The processing unit 1510 may be implemented by using the processor 1410 shown in FIG. 14. Optionally, if the computer device shown in FIG. 14 includes the memory 1400, the processing unit 1510 may be implemented by using the processor 1415 and the memory 1400. The transceiver unit 1520 may be implemented by using the transceiver 1430 shown in FIG. 14. The transceiver 1430 includes a receiving function and a sending function. Specifically, the processor is implemented by executing a computer program stored in the memory. Optionally, when the apparatus 1500 is a chip, a function and/or an implementation process of the transceiver unit 1520 may alternatively be implemented through a pin, a circuit, or the like. Optionally, the memory may be a storage unit in the chip, for example, a register or a cache. Alternatively, the storage unit may be a storage unit that is in the apparatus and that is located outside the chip, for example, the memory 1420 shown in FIG. 14, or may be a storage unit that is deployed in another system or device and is not in the computer device.

Various aspects or features of this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a set of instructions. When the computer program or the set of instructions are run on a computer, the computer is enabled to perform the method according to any one of the embodiments shown in FIG. 5 to FIG. 8.

According to the method provided in embodiments of this application, this application further provides a computer-readable storage medium. The computer-readable medium stores a program or a set of instructions. When the program or the set of instructions are run on a computer, the computer is enabled to perform the method according to any one of the embodiments shown in FIG. 5 to FIG. 8.

According to the method provided in embodiments of this application, this application further provides a communication system. The communication system includes the foregoing apparatus or device.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both an application running on a computing device and the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and according to a signal containing one or more data packets (for example, data from two components interacting with another component in a local system, a distributed system, and/or across a network such as the internet interacting with another system by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first information, wherein the first information is related to a status of a first multicast service, and/or the first information is related to configuration information of the first multicast service in a second cell; and
determining, by the terminal device based on the first information, whether to send first request information to the second cell, wherein the first request information is used by the terminal device to establish or resume an RRC connection, wherein
the terminal device is a terminal device that receives the first multicast service, the terminal device is a terminal device in a radio resource control RRC non-connected state, and the terminal device is a terminal device that performs handover or reselection from the first cell to the second cell.

2. The method according to claim 1, wherein the determining, by the terminal device based on the first information, whether to send first request information to the second cell comprises:
when the status of the first multicast service is an activated state, sending, by the terminal device, the first request information to the second cell,
or
when the status of the first multicast service is a deactivated state, remaining, by the terminal device, in the non-connected state.

3. The method according to claim 1, wherein the determining, by the terminal device based on the first information, whether to send first request information to the second cell comprises:
when configuration information of the first cell is different from that of the second cell, sending, by the terminal device, the first request information to the second cell,
or
when configuration information of the first cell is the same as that of the second cell, remaining, by the terminal device, in the non-connected state.

4. The method according to claim 1, wherein the determining, by the terminal device based on the first information, whether to send first request information to the second cell comprises:
when configuration information of the first cell is the same as that of the second cell, and the status of the first multicast service is an activated state, sending, by the terminal device, the first request information to the second cell,
or
when configuration information of the first cell is the same as that of the second cell, and the status of the first multicast service is a deactivated state, remaining, by the terminal device, in the non-connected state.

5. The method according to any one of claims 2 to 4, wherein when the terminal device remains in the non-connected state, the method further comprises:
receiving, by the terminal device, a first paging message, wherein the first paging message comprises an identifier of the first multicast service.

6. The method according to any one of claims 1 to 5, wherein the method further comprises:
receiving, by the terminal device, second information, wherein the second information is used to determine that the second cell does not provide the first multicast service for the terminal device in the non-connected state.

7. The method according to claim 6, wherein when the second information comprises configuration information of a multicast control channel MCCH of the second cell, the method further comprises:
obtaining, by the terminal device, third information based on the configuration information of the MCCH, wherein the third information comprises MCCH information of the second cell, and the MCCH information does not comprise the identifier of the first multicast service,
or
failing, by the terminal device, to obtain the third information based on the configuration information of the MCCH.

8. The method according to any one of claims 1 to 7, wherein the first information is carried in at least one of the following messages:
a paging paging message, a system information block SIB, and MCCH information.

9. The method according to any one of claims 1 to 8, wherein when the first information is related to the configuration information of the first multicast service in the second cell, the first information comprises PDCP synchronization information of the second cell and/or PDCP synchronization information of the first cell, and the synchronization information comprises that PDCP is synchronized or not synchronized.

10. The method according to claim 9, wherein when the synchronization information comprises that PDCP of the second cell is not synchronized and/or PDCP of the first cell is not synchronized, the method further comprises:
resetting, by the terminal device, the PDCP entity or the PDCP variable,
and/or
discarding, by the terminal device, a buffered PDCP data packet or delivering a buffered PDCP data packet to a higher layer.

11. A communication method, comprising:
determining, by a first cell, first information, wherein the first information is related to a status of a first multicast service; and
sending, by the first cell, the first information to the terminal device, wherein the first information is used to determine whether the terminal device sends first request information to a second cell, and the first request information is used by the terminal device to establish or resume an RRC connection, wherein
the terminal device is a terminal device that receives the first multicast service, the terminal device is a terminal device in a radio resource control RRC non-connected state, and the terminal device is a terminal device that performs handover or reselection from the first cell to the second cell.

12. The method according to claim 11, wherein the status of the first multicast service comprises an activated state or a deactivated state.

13. The method according to claim 12, wherein the method further comprises:
sending, by the first cell, second information to the terminal device, wherein the second information is used to determine that the second cell does not provide the first multicast service for the terminal device in the non-connected state.

14. The method according to any one of claims 11 to 13, wherein the first information is carried in at least one of the following messages:
a paging paging message, a system information block SIB, and MCCH information.

15. A communication method, comprising:
determining, by a second cell, second information, wherein the second information is used to determine that the second cell does not provide a first multicast service for a terminal device in a non-connected state; and
sending, by the second cell, the second information to the terminal device, wherein
the terminal device is a terminal device that receives the first multicast service, the terminal device is a terminal device in a radio resource control RRC non-connected state, and the terminal device is a terminal device that performs handover or reselection from the first cell to the second cell.

16. The method according to claim 15, wherein when the second information comprises configuration information of a multicast control channel MCCH of the second cell, the method further comprises:
sending, by the second cell, third information to the terminal device, wherein the third information comprises MCCH information of the second cell, and the MCCH information does not comprise an identifier of the first multicast service.

17. The method according to claim 15 or 16, wherein the method further comprises:
sending, by the second cell, configuration information of the first multicast service in the second cell to a first network device, wherein the configuration information is used to determine first information, the first information is used to determine whether the terminal device sends first request information to the second cell, and the first request information is used by the terminal device to establish or resume an RRC connection, wherein
the first cell and the second cell are neighboring cells, and the first network device is a network device that provides a service for the first cell.

18. The method according to any one of claims 15 to 17, wherein the method further comprises:
sending, by the second cell, PDCP synchronization information of the second cell to the first network device, wherein the synchronization information comprises that PDCP is synchronized or not synchronized.

19. A communication method, comprising:
determining, by a first network device, first information, wherein the first information is related to configuration information of a first multicast service in a second cell; and
sending, by the first network device, the first information to the terminal device, wherein the first information is used to determine whether the terminal device sends first request information to the second cell, and the first request information is used by the terminal device to establish or resume an RRC connection, wherein
the terminal device is a terminal device that receives the first multicast service, the terminal device is a terminal device in a radio resource control RRC non-connected state, the terminal device is a terminal device that performs handover or reselection from a first cell to the second cell, and the first network device is a network device that provides a service for the first cell.

20. The method according to claim 19, wherein the method further comprises:
receiving, by the first network device, the configuration information of the first multicast service in the second cell, wherein the configuration information is used to determine the first information.

21. The method according to claim 19 or 20, wherein the first information comprises PDCP synchronization information of the second cell, and the synchronization information comprises that PDCP is synchronized or not synchronized.

22. The method according to any one of claims 19 to 21, wherein the first information is carried in at least one of the following messages:
a paging paging message, a system information block SIB, and MCCH information.

23. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 10, to enable the communication apparatus to perform the method according to any one of claims 11 to 14, to enable the communication apparatus to perform the method according to any one of claims 15 to 18, or to enable the communication apparatus to perform the method according to any one of claims 19 to 22.

24. A computer-readable storage medium, wherein the computer-readable storage medium stores instructions, and when the computer instructions are run on a computer, the computer is enabled to perform the method according to any one of claims 1 to 10, the computer is enabled to perform the method according to any one of claims 11 to 14, the computer is enabled to perform the method according to any one of claims 15 to 18, or the computer is enabled to perform the method according to any one of claims 19 to 22.

25. A chip, comprising:
a memory, configured to store a computer program; and
a processor, configured to: read and execute the computer program stored in the memory, wherein when the computer program is executed, the processor performs the method according to any one of claims 1 to 10, the processor is enabled to perform the method according to any one of claims 11 to 14, the processor is enabled to perform the method according to any one of claims 15 to 18, or the processor is enabled to perform the method according to any one of claims 19 to 22.

26. A computer program product, wherein the computer program product comprises computer program code, and when the computer program code is executed on a computer, the computer is enabled to perform the method according to any one of claims 1 to 10, the computer is enabled to perform the method according to any one of claims 11 to 14, the computer is enabled to perform the method according to any one of claims 15 to 18, or the computer is enabled to perform the method according to any one of claims 19 to 22.
